# NEW EUROPEAN PATENT SPECIFICATION

(11) **EP 2 187 758 B2**
(45) Date of publication and mention of the opposition decision: **24.11.2021**
(45) Mention of the grant of the patent: 24.10.2018
(21) Application number: 08796642.0
(22) Date of filing: 25.07.2008
(51) Int. Cl.: A23G 3/00, A23G 3/02, A23G 3/20, A23G 4/00, A23G 4/20, A23G 4/04, A23G 3/34, A23G 3/06, A23G 7/00

(54) **METHOD AND APPARATUS FOR PROCESSING CONFECTIONERY PRODUCTS**
VERFAHREN UND GERÄT FÜR DIE VERARBEITUNG VON KONFEKTPRODUKTEN
PROCÉDÉ ET APPAREIL POUR TRAITER DES PRODUITS DE CONFISERIE

(30) Priority: 27.07.2007 US 952255 P
(43) Date of publication of application: 26.05.2010
(73) Proprietor: Intercontinental Great Brands LLC, East Hanover, NJ 07936 (US)
(72) Inventor: ELEJALDE, Cesar, Randolph, NJ 07869 (US); JANI, Bharat, East Brunswick, NJ 08816 (US)
(74) Representative: Wilson Gunn
(86) International application number: PCT/US2008/071216
(87) International publication number: WO 2009/018158

(56) References cited:
- US-A- 2 256 190
- US-A- 4 778 685
- US-A- 4 949 630
- US-A- 5 002 791
- US-A- 5 290 577
- US-A- 5 458 894
- US-A1- 2002 004 086
- US-A1- 2003 185 092
- US-A1- 2004 037 925
- US-A1- 2007 003 663
- US-A1- 2007 104 830
- US-B1- 6 280 780
- US-B1- 6 472 001

## Description

### FIELD:

The present invention relates generally to a method and an apparatus for forming individual center-filled confectionery pieces from a continuous rope or strand. More particularly, the present invention relates to a method and apparatus for forming such center- filled confectionery pieces including the use of a rope sizer and a relaxation conveyor.

### BACKGROUND:

Center-filled confectionery products are well known. These products typically have a solid or semi-solid exterior shell and a soft liquid or semi-liquid center. One well known example of such center-filled confectionery products are liquid-filled gum pieces.

One typical process for forming such center-filled confectionery products is to extrude a continuous rope or strand into a hollow-tubular configuration. The hollow rope is then filled with the soft or liquid confectionery product. Thereafter, the rope is processed in a longitudinally continuous fashion so as to size the rope and pass the rope between dies which continuously cut the rope into individual center-filled pieces. The process for forming such pieces and an apparatus for affecting the process is more fully shown and described in U.S. Patent Nos. 6,838,098; 6,558,727; 6,472,001 and 6,284,291.

While these processes and similar processes serve adequately to form center-filled confectionery products such as center-filled gum, the speed and efficiency of the process is limited due to the fact that the rope is formed and processed in a linear fashion. In a typical process, the rope is extruded at a first diameter and then must be reduced to a smaller diameter by using rollers or another similar apparatus.

US 2003/185092 describes a kneading device for kneading a main raw material of high viscosity and a secondary raw material of liquid or powder, which continuously delivers a kneaded raw material so obtained, and a ropesizer including a sheet forming unit, with a delivering unit applying a second raw material onto a first raw material, which is elongated into a sheet shape and is conveyed by the sheet forming unit, so as to be in a strand form.

US 2004/037925 describes a three-phase center-filled gum or bubble gum candy lollipop product, with an extruded gum or bubble gum material having a semi-liquid center-fill material added to it in a batch forming mechanism simultaneously with the formation of an exterior candy shell.

US 2002/004086 describes a process for making an aerated, confectionery product of multiple colors, which includes creating first and second aerated streams of first and second colors of substantially identical density and rheological properties, which are fed to an extrusion die manifold, where they are extruded in disproportionate amounts to form a multicolored a rope having the first and second colors of unequal proportion.

US 2007/104830 describes an apparatus and method for the continuous production of center-filled confectionery products, the apparatus including an extruder for forming a continuous extrudate having a plurality of center-filled confectionery ropes, a forming device for forming individual confectionery pieces, particularly sealed center-filled confectionery pieces. The forming device provides coordination and control of extrudate formation and extrudate feed into the forming device.

US 2007/003663 describes a chewing or bubble gum composition which includes a liquid fill composition and a gum region which includes a gum base surrounding the liquid fill which may include a modified release component, wherein the gum region includes a polyol composition including at least one polyol and having a water solubility of less than 72% by weight at 25° C.

The rope, being a rubbery material has a tendency to longitudinally contract after it is extruded, due to natural forces, this is comparable to a relaxation. The faster the product is extruded and reduced, the more likely it is to relax. With center filled products any longitudinal contraction after cutting may cause the center fill material to leak out of the product. Thus, there is a need to allow for an efficient process to produce gum, while avoiding center-fill leakage after cutting.

It is desirable to provide a process and apparatus which more efficiently processes ropes of confectionery material, while avoiding the problems associated with shrinkage and/or leakage of the center-filled confectionery products.

### SUMMARY OF THE INVENTION:

The present invention provides an apparatus which prepares center-filled consumable products, including chewing gums and other confectionery products. The invention provides an apparatus (10) for preparing a center-filled consumable product comprising, in sequential order:
a. an extruder (12), which extrudes a continuous tubular rope of consumable product;
b. a rope sizer (16) for reducing the diameter of said extruded continuous tubular rope;
d. a relaxation conveyor (18) for moving said rope from said rope sizer (16) to said cutting apparatus (20) comprising c. an oscillating swing arm (32) for depositing the rope onto the relaxation conveyor (18) in a continuous wave pattern (34); and
e. a cutting apparatus (20) for cutting said continuous rope into said consumable product.

In another aspect of the invention, there is provided a method for forming a center-filled consumable product using an apparatus according to any preceding claim, the method comprising the steps of, in order:
a. extruding a continuous tubular rope of said consumable product;
b. reducing the diameter of said extruded continuous tubular rope;
c. passing the rope out of an oscillating swing arm (32), wherein the rope is deposited on a relaxation conveyor (18) in a continuous wave pattern (34); and
d. passing said rope along a relaxation conveyor (18); and
e. passing said rope into a cutting apparatus (20), wherein the cutting apparatus (20) cuts the rope into individual pieces.

### OVERVIEW OF THE INVENTION:

The invention provides methods and apparatuses for preparing center-filled consumable products. In some embodiments, the center-filled consumable product may be a liquid center-filled chewing gum. If desired, the invention may include an injection port for filling the tubular rope of consumable product with a second consumable product. In some embodiments, the invention may include a rope sizer. Optionally, the rope sizer may include a plurality of pairs of rollers aligned longitudinally for receipt of the tubular rope. It may be desired to include a rope sizer that provides a first pair of rollers for accommodating the tubular rope, a last pair of rollers for permitting egress of the tubular rope, and at least one additional pair of rollers there between. If desired, the roller pairs may include grooved surfaces for accepting the tubular rope. Further, the roller pairs may be mutually rotatable to move the tubular rope between the first and last pairs of rollers. In one embodiment, each of the roller pairs may rotate at different speeds, and in particular the last roller pair may move at a speed of rotation greater than the speed of rotation of the first roller pair.
In some embodiments, the number of roller pairs between the first and last pair of rollers is between about 3 to about 5, and optionally the distance between the pairs of rollers may decrease from the first pair of rollers to the last pair of rollers. In one embodiment, the pairs of rollers move the rope of consumable product at velocities from about 10 m/min to about 125 m/min. Further, the rope sizer may reduce the thickness of the rope of consumable product by about 30% to about 70%.

The invention includes a relaxation conveyor. The relaxation conveyor may include a conveyor belt, the conveyor belt moving at a speed that is about 50% of the speed of the fastest roller in the rope sizer. The relaxation conveyor includes a swing arm, wherein the swing arm deposits the rope of consumable product from the rope sizer onto the conveyor belt at the relaxation conveyor. The swing arm oscillates to deposit the rope of consumable product onto the conveyor belt in a continuous wave pattern.

The invention includes a cutting apparatus to form individual pieces of center- filled product. The step of cutting the rope includes feeding the rope of consumable product through a cutting apparatus. Optionally, the cutting apparatus may move at a speed that is about 10% to about 20% slower than the fastest roller in the rope sizer.

A method is provided herein which includes the step of reducing the diameter of a tubular rope of consumable product. The step of reducing the diameter may include providing a rope sizer, the rope sizer including a first pair of rollers for accommodating entry of the extruded tubular rope, and a last pair of rollers for permitting egress of the extruded tubular rope, and at least one pair of rollers there between. The step of reducing the diameter may further include mutually rotating each the pair of rollers at different speeds. It may be desired to include mutually rotating the last pair of rollers at a faster speed than the speed of rotation of the first pair of rollers. Optionally, the rollers may move the rope of consumable product at speeds from about 10 m/min to about 125 m/min. Further, the rollers may reduce the diameter of the rope of consumable product by about 30% to about 70%.

The method includes the step of transporting the rope of consumable product. Optionally, the step of transporting the rope of consumable product may include moving the relaxation conveyor at a speed about 50% of the speed of the last roller pair. The method includes the step of depositing the rope of consumable product onto the relaxation conveyor in the shape of a continuous wave. The depositing step includes the steps of providing a swing arm for accommodating the rope; and oscillating the swing arm.

In some embodiments, the invention may include an injection port for filling the tubular rope of consumable product with a second consumable product.

It may be desirable to apply an anti-sticking agent to one or more components in the invention. For example, the invention may include a means for applying an anti-sticking agent to the rope sizer, to the cutting apparatus, to the relaxation conveyor, to the rope, or to combinations thereof. Further, the anti-sticking agent may be any desired material, and may be a powder or an oil. The anti-sticking agent may be applied to the component at any time. For example, the anti-sticking agent may be applied to the desired component prior to the step of reducing the diameter of the rope of consumable product. Alternatively, the anti-sticking agent may be applied to the desired component

### BRIEF DESCRIPTION OF THE DRAWINGS:

Figure 1 shows a schematic drawing of the center-filled consumable product forming apparatus as described herein.
Figure 2 shows a side angle view of the rope sizing apparatus as described herein.
Figure 3 shows a close-up view between a pair of rollers in the rope sizing apparatus as described herein.
Figure 4 depicts an embodiment of the relaxation conveyor using a wave pattern to transport the rope along the conveyor.
Figure 5 depicts an embodiment of the chain cutting apparatus as described herein.

### DETAILED DESCRIPTION OF THE PREFERRED EMBODIMENT:

The method and apparatus of the present invention includes an extruder for extruding continuous tubular ropes or strands of a first confectionery product. The extruder may be capable of extruding multiple tubular ropes of the first confectionery product, or it may extrude a single continuous rope. The ropes may be of any shape or size desired, including circular, rectangular, or any other formation desired. One such potential extruder is described in Applicant's co-pending patent application (entitled, "Method and Apparatus for Processing Multiple Confectionery Ropes", Attorney Docket No. 1421-250P, Filed July 27, 2007).

Embodiments described herein provide a multi-component composition which includes at least one center-fill region and a confectionery region. The individual confectionery piece may also include an outer coating or shell, which typically provides a crunchiness to the piece when initially chewed. The individual confectionery pieces may form a variety of shapes including pellet, tablet, ball, pillow, chunk, stick and slab, among others.

Center-filled confectionery pieces, such as center-filled gum, have a desired length of about 18 mm to about 20 mm, and a desired width of about 10 mm to about 12 mm. There is some degree of longitudinal shrinkage after the pieces have been cut. In a preferred embodiment, the degree of shrinkage is kept below about 10%, and preferably below at least 5%. Greater shrinkage has a higher tendency to cause the gum piece to break or crack, and thus leak the center-filled composition out of the product.

The extrusion may take place at any speed desired. The speed of the extrusion relates to the speed of the other elements of the invention, including sizing, relaxation, and cutting. Preferably, the rope is extruded at a speed of about 10 m/min to about 150 m/min, and more specifically at about 75 to about 100 m/min. For center-filled products, the center fill composition may be injected directly into the continuous tubular rope as it is being extruded. Alternatively, the center-fill composition may be injected into the continuous tubular rope at a point after extrusion, but before cutting.

### The Apparatus

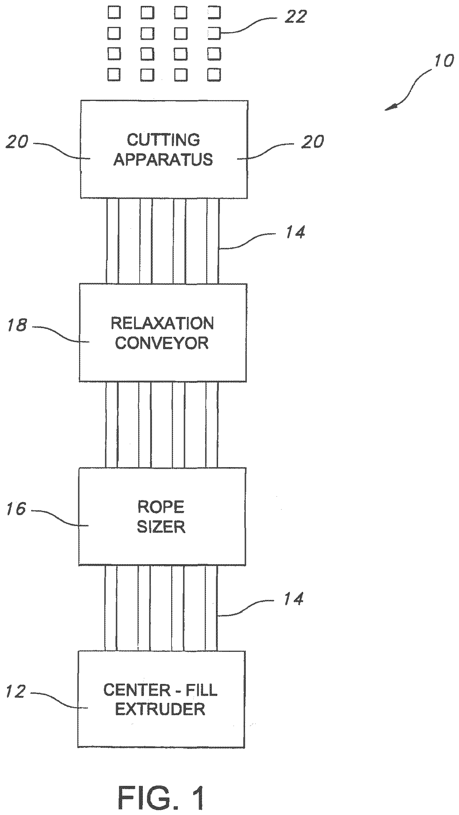

The apparatus **10,** which may be used in conjunction with the present invention, is schematically shown in Fig. 1. The apparatus **10** includes an extruder **12,** which extrude one or more center-filled ropes **14.** The extruder **12** may include one or more injection nozzles (not shown) for injecting liquid center-fill product into a hollow tubular rope(s) **14.** The rope(s) **14** pass through a rope sizer **16,** more fully described herein below, which reduces the size of the extruded rope(s) **14.** The sized rope(s) **14** then pass to a relaxation conveyor **18,** which will also be described in further detail hereinafter. The relaxation conveyor **18** allows the rope(s) **14** to relax. Thereafter, the rope(s) **14** are moved through a cutting apparatus **20,** also more fully described below, which cuts the rope(s) **14** into individual pieces **22.**

### The Rope Sizer

In one aspect, the present invention includes an apparatus to size the confectionery ropes after they are extruded. This apparatus is referred to as a "rope sizer." In traditional extrusion, the tubular rope product is extruded at a size that is much thicker and larger than the desired end product. Thus, there is a need for a proper sizing apparatus, which extends the product, stretching it out so that it is the right thickness and size, while still maintaining the structural integrity of the rope, avoiding unwanted cracking and leakage of the center-fill composition. Rope sizers disclosed herein reduce the size of the extruded rope by any amount desired, and most preferably by about 30% to about 70%.

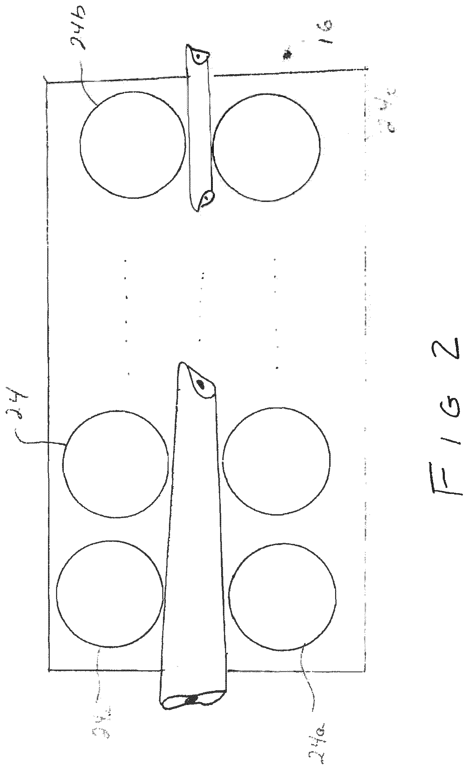

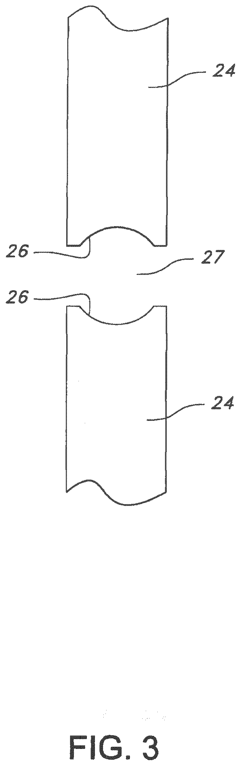

With reference to Figure 2, the preferred rope sizer **16** has a plurality of pairs of rollers **24.** The rollers **24** include a grooved surface **26** defining therebetween a passage **27** for accommodating rope **14** (shown in more detail in Fig. 3) designed to pull the rope product through. As the rope is fed through the rope sizer **16,** the speed of the rollers **24** increases, so the last pair of rollers in the rope sizer **24b** moves at a speed that is faster than the first pair of rollers in the rope sizer **24a.** In addition, the grooved openings **26** get progressively smaller as the rope **14** is fed through the rope sizer **16,** which helps to size the rope **14** properly. The proximal pair of rollers **24a,** which is located at the point where the continuous rope **14** enters the rope sizer **16,** has a larger grooved opening **26.** The distal pair of rollers **24b,** which is located at the point where the continuous rope **14** exits the rope sizer **16,** has a smaller grooved opening **26.** The pairs of rollers in between the proximal pair of rollers **24a** and distal pair of rollers **24b** have grooves **26** that are increasingly reduced in size. As the rope **14** is fed through the rope sizer **16,** it is stretched and compressed until it has a thickness and diameter that allows properly-sized end products **22.**

Thus, in one aspect of the invention, the pair of proximal rollers **24a** has a large groove opening **26** and moves at a slow rate of speed. The pair of distal rollers **24b** has a small groove opening **26** and moves at a fast rate of speed. The pairs of rollers **24** in between the proximal and distal pairs of rollers have increasingly smaller grooves, as well as increasing speed as the rope **14** travels through the rope sizer **16.**

When the chewing gum ropes are extruded from the extruder **12,** they may have an initial diameter of about 10 mm to about 40 mm, and more specifically from about 22 to about 26 mm. The pairs of rollers **24** have grooved openings **26** ranging from about 5 mm to about 50 mm in diameter, and more specifically from about 9 mm to about 36 mm in diameter.

In addition, the speed at which the rollers **24** move may vary. In one embodiment, manufacture of center-filled confectionery pieces, the rope **14** exits the rope sizer **16** at a velocity of at least 100 m/min; however it may exit the rope sizer **16** at any desired velocity from about 50 m/min to about 150 m/min. When the rope **14** first enters the rope sizer **16,** it moves through the first pair of rollers **24a** at a much slower velocity, generally from about 5 m/min to about 30 m/min. The pairs of rollers in between the proximal and distal ends feed the rope **14** through at varying velocities from about 20 m/min to about 140 m/min, with the last pair of rollers **24b** moving the rope **14** at about 20 m/min to about 150 m/min.

Optionally, an anti-sticking agent may be used in conjunction with the rope sizer **16,** to prevent the rope **14** from adhering to the rollers and getting stuck, which would decrease productivity. Generally, anti-sticking agents may be in the form of powders such as talc, calcium carbonate, or oils. For example, a fine mist of a food grade oil or an oil-based material may be sprayed on the rollers and material engaging surfaces of the rope sizer **16** before or as the rope of gum material **14** makes contact with the rollers **24.** The oil temporarily reduces or eliminates the stickiness of the gum material and allows it to be sized without the need to cool the rollers with cooled air or nitrogen gas. In the alternative or in addition, it is also possible to apply the oil material directly on the rope of gum material **14.** Suitable food grade oil or oil-based materials include, but are not limited to almond oil, apricot kernel oil, avocado oil, black cumin seed oil, borage seed oil, camellia oil, castor oil, cocoa oil, coconut oil, corn oil, cottonseed oil, evening primrose seed oil, grapeseed oil, hazelnut oil, hemp seed oil, jojoba oil, karanja seed oil, kukui nut oil, macadamia nut oil, meadowfoam seed oil, neem seed oil, olive oil, palm oil, peanut oil, pumpkin seed oil, rosehip seed oil, safflower oil, sea buckthom oil, sesame seed oil, shea nut oil, soybean oil, sunflower oil, tamanu oil, vitamin E oil, and wheat germ oil. Synthetic oils may also be used.

In an embodiment, the apparatus **10** may be kept at a reduced temperature in order to prevent the confectionery material from sticking to the various parts described herein. For this purpose, cooled air or gas may be directed toward the rope sizer **16,** the relaxation conveyor **18,** the cutting apparatus **20,** or any other part of the system in which the confectionery may potentially stick. The cooling air may flow directly at the surface of the parts to maintain it at a pre-determined temperature. In another embodiment, the parts themselves may be chilled, such as using a chilled extruder **12,** a chilled rope sizer **16,** a chilled relaxation conveyor **18** and/or a chilled cutting apparatus **20.** Such chilling may be achieved through use of cooled fluid, such as water, liquid nitrogen, or other fluid. In an embodiment, the center fill material may be cooled upon exit from the filling apparatus. Using cooled center fill material has the effect of cooling the outer confectionery portion from the inside. The temperature of the parts is preferably maintained below -90.degree.F, although the actual temperature will vary with the material and production rate. The individual parts and/or the confectionery itself may be cooled at any temperature from about -100.degree.F to about 50.degree.F. In order to control costs of manufacture, the temperature should be just cold enough to support production, while inhibiting sticking of the confectionery.

### The Relaxation Conveyor

The method and apparatus of the present invention uses a relaxation conveyor **18** to aid in the formation of the gum pieces. It is generally known that after stretching and extending confectionery ropes, specifically chewing gums, the rope **14** has a tendency to "spring back" and shrink to its normal size. By "relaxation conveyor," it is contemplated that any mechanism to allow the tubular confectionery to "relax" and shrink prior to cutting may be used. The relaxation conveyor **18** provides a sufficient time delay between extrusion and cutting, to allow the confectionery rope **14** to get to a more stable form.

When multiple ropes are extruded, the use of a very wide table relaxation conveyor **18** is contemplated, but the use of multiple conveyors may also be used. For example, when extruding four continuous and simultaneous confectionery ropes **14,** the ropes may be spread on the same relaxation conveyor **18,** which is wide enough to encompass all four ropes. Optionally, multiple individual relaxation conveyors may be used for simultaneous multiple extrusions.

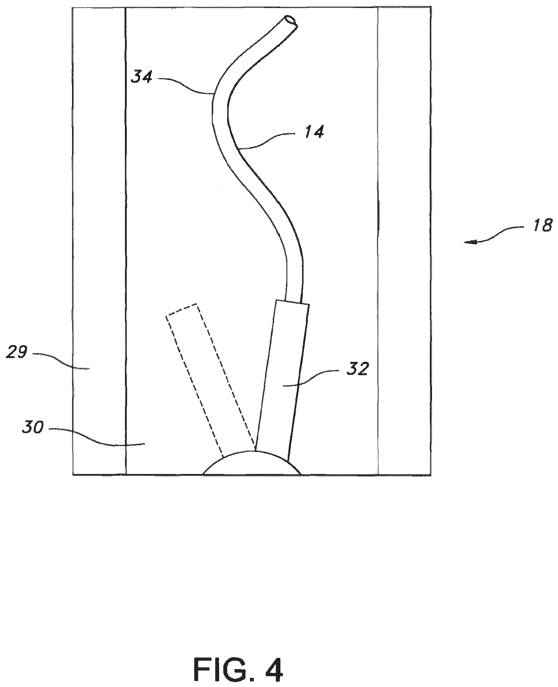

The relaxation conveyor **18** is schematically shown in Figure 1. With reference to Figure 4, one embodiment of the relaxation conveyor **18** includes a table **29** and a conveyor belt **30** that moves across table **29** at a speed related to the speed that the continuous rope **14** is fed through the rope sizer **16.** The relaxation conveyor belt **30** should move at about half the velocity at which the continuous rope **14** moves as it exits the rope sizer **16.** However, the relaxation conveyor belt **30** may move at any velocity desired, depending on the rate of shrinkage and the desired time delay between sizing and cutting. The relaxation conveyor **18** may be located at a point after the rope **14** has been sized, either from extruder **12** or through rope sizer **16,** and at a point before the rope **14** is cut by the cutting apparatus **20.**

The relaxation conveyor **18** incorporates the use of swing arm **32,** which feeds the confectionery rope **14** onto the relaxation conveyor belt **30** in a non-linear path, such as a traditional wave **34** as depicted in Figure 4. As the continuous rope **14** is fed through and out of the rope sizer **16,** it is led along the swing arm **32** and deposited onto the conveyor belt **30.** The swing arm **32** oscillates back and forth at varying speeds, allowing the continuous rope **14** to be deposited on the conveyor belt **30** in a wave pattern **34.** The degree of oscillation affects the frequency and amplitude of the wave **34** on the conveyor belt **30,** and thus affects the time delay between sizing and cutting.

Using a wave pattern **34** to deposit the rope onto the relaxation conveyor belt **30** allows a greater time delay prior to the rope being fed into the cutting apparatus **20,** without having to use an extremely long relaxation conveyor **18.** Without the use of a wave pattern **34,** the continuous rope **14** relaxes for a shorter period of time. By allowing more time to pass, the continuous rope **14** has more time to "spring back" and shrink prior to being cut, giving more stability and less tendency to leak prematurely. Thus, the wave pattern **34** gives increased stability over a non-wave pattern relaxation.

Optionally, an anti-sticking agent or cooled component system as described above may be used with the relaxation conveyor **18.** Incorporation of the anti-sticking agent and cooling system aids in reducing the tendency of the rope to get stuck as it travels along the conveyor **18.**

As can be seen in Table 1 below, the chewing gum cores exhibit significantly less shrinkage when a relaxation conveyor **18** is used. For each of batches 1-3, four independent tests were run. The first three (labeled LC 50 m/min; LC 75 m/min; and LC 100 m/min) tests in each batch all used a relaxation conveyor **18** as described herein. The fourth test in each batch (labeled CC 60 m/min) did not use a relaxation conveyor **18** as described herein. As shown in Table 1, the tests using the relaxation conveyor **18** only experienced shrinkage of about 4.0% to about 7.25%. The tests without a relaxation conveyor **18** showed shrinkage of about 13.5%, about 15%, and about 16%.

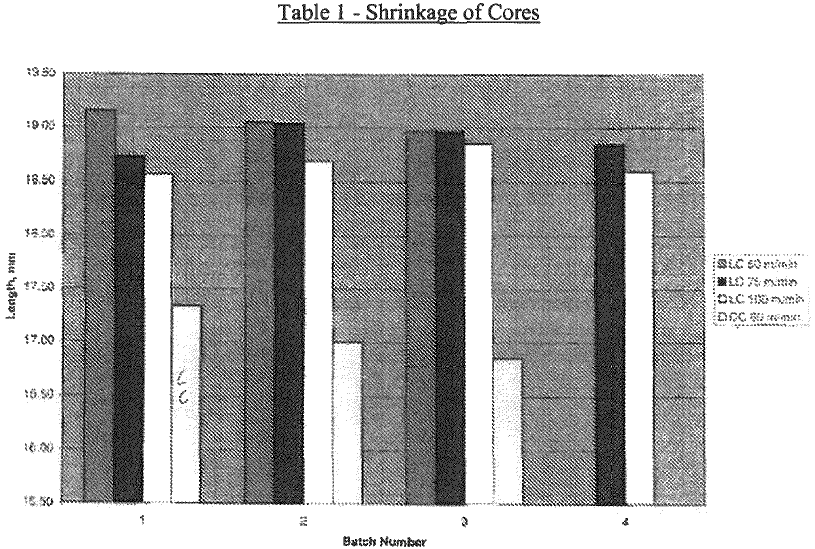

Similarly, as shown in Table 2 below, the chewing gum cores have a much greater length when a relaxation conveyor **18** as described herein is used. The same four tests were used for the three batches; with those tests using a relaxation conveyor **18** had final cores with lengths of about 19.2 mm to about 18.5 mm. Those tests without the relaxation conveyor **18** showed a final length of about 17.4 mm, 17.0 mm, and 16.8 mm.

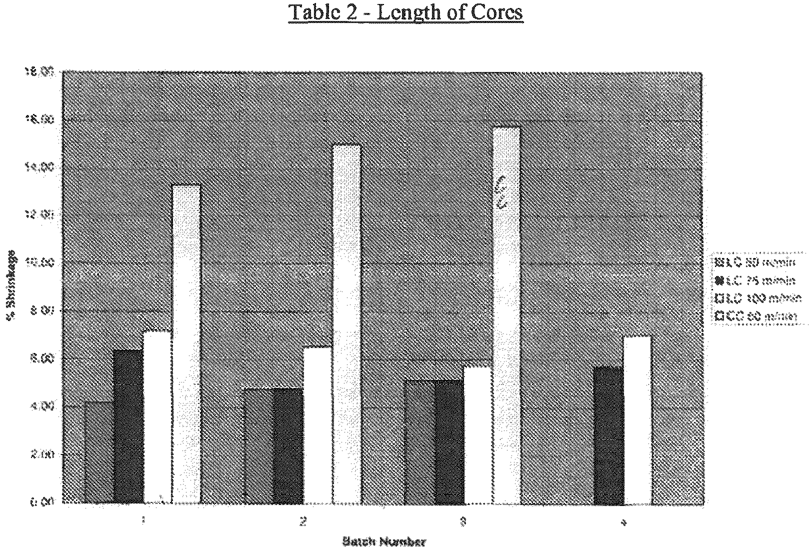

### The Cutting Apparatus

Any conventional means to cut the confectionery product into individual pieces can be used with the present invention. Preferably the invention uses a chain cutter apparatus **20** shown schematically in Fig. 1. Chain cutting apparatus **20** includes multiple dies to cut a plurality of individual pieces from the continuous filled rope **14.** Such chain cutting apparatuses include those described in Applicant's co-pending PCT patent application (entitled "Chain cutter for continuously forming center-filled gum pieces", Attorney Docket No. 1421-182 PCT, filed June 29, 2007), which is hereby incorporated by reference herein.

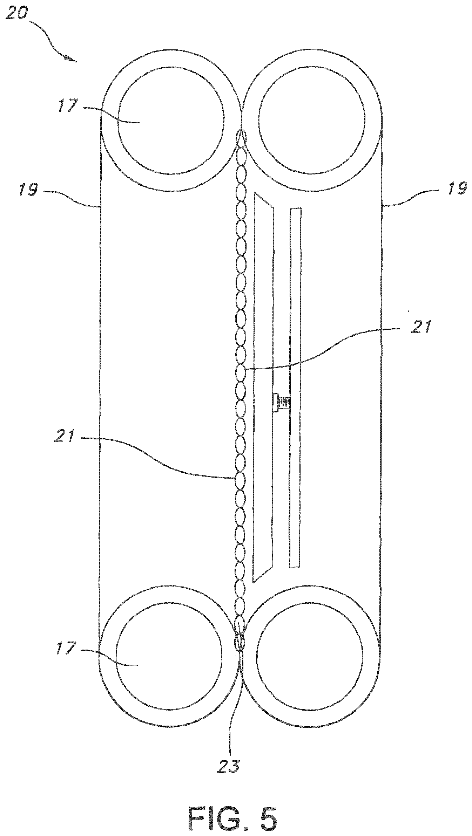

With reference to Fig. 5, generally the preferred cutting apparatus **20** includes a pair of continuous chains **19** placed facing opposite each other. The chains **19** include die halves **21.** The chains **19** are rolled about the rollers **17** to bring a plurality of the die halves **21** together to form a plurality of longitudinally extended closed die cavities **23.**

In one embodiment, the rope **14** may be fed from the relaxation conveyor **18** (Fig. 1) into the cutting apparatus **20** between the chains. An optional supplemental roller (not shown) located after the relaxation conveyor **18** may help feed the confectionery rope **14** into the cutting apparatus **20.** This supplemental roller and cutting apparatus **20** should move the rope **14** at approximately the same velocity, to avoid bunching or tearing. The rope **14** may then be fed between the die halves **21** of the cutter, and fed through the cutter. The individual closed die cavity **23,** which contains one piece of confectionery product, traverses from one end of the chain to the other, cutting and sealing the gum piece **22.** Such sealing is important with a center-filled gum product so as to prevent release of the liquid center from the formed piece. The chain cutting apparatus **20** may contain any number of individual die cavities **23.** A chain cutting apparatus **20** having multiple sets of dies may be incorporated, such that several ropes **14** of confectionery product may be simultaneously formed. As with the rope sizer **16** or the relaxation conveyor **18,** the cutting apparatus **20** may optionally use an anti-sticking agent such as powder or oils or a cooling system, as described previously.

The confectionery products described herein may be manufactured by use of the extruder **12,** rope sizer **16,** relaxation conveyor **18,** and chain cutting apparatus **20,** or they may be manufactured by use of any combination of these elements, including by use of only one of the elements. Further, the methods and apparatus described herein may be used to manufacture any number of confectionery ropes simultaneously.

### Speed of the Rope Sizer. Relaxation Conveyor and Cutting Apparatus

With reference to Figs. 1-4, the relative velocities of rope as it travels through the rope sizer **16,** through the relaxation conveyor **18** and through the cutting apparatus **20** are all associated with and depend upon each other. If the rope **14** moves too quickly through the rope sizer **16** as compared to the velocity of the rope **14** through the relaxation conveyor **18** and/or through the cutting apparatus **20,** the confectionery ropes **14** will not be fed into the cutting apparatus **20** quickly enough, resulting in bunching of the ropes **14,** and eventual kinking and leakage of the center-filled composition. Likewise, if the rope **14** moves too slowly through the rope sizer **16** as compared to the velocity of the rope through the relaxation conveyor **18** and/or through cutting apparatus **20,** the rope **14** will be fed too quickly into the cutter **20** or pulled too quickly along the conveyor **18,** resulting in increased tension on the rope **14,** and eventually the rope **14** breaking in half. Once the rope **14** is broken or cracked, leakage of the center-filled confectionery is likely to occur.

Thus, pursuant to the present invention, the relative velocities of the rope as it travels through the rope sizer **16,** through the conveyor **18** and through the cutting apparatus **20** have a relationship relative to each other. The velocity differential between the rope **14** through the rope sizer **16** and the cutting apparatus **20** dictate the length of time needed for relaxation. The greater the differential, the greater the length of time delay, and vice versa. In a preferred embodiment, the rope **14** moves through the cutting apparatus **20** at about 100 m/min, to achieve a desired amount of finished, cut confectionery pieces **22.**

As described herein, the rope sizer **16** includes several pairs of rope sizing rollers **24,** each pair varies in speed, with the slowest roller pair being located at the entry point **24a** of the confectionery rope **14,** and the fastest roller pair being located at the exit point **24b** of the confectionery rope **14.** After the confectionery rope **14** leaves the rope sizer **16,** it is deposited onto the relaxation conveyor **18,** to allow for a time delay prior to being fed into the cutting apparatus **20.** Thus, the speed of the rope sizing roller closest to the exit point of the confectionery rope, *i.e.,* the pair of distal rollers **24b,** plays the most important role with respect to the relative speeds of the other elements.

The rope sizer **16** passes the continuous rope **14** at a velocity faster than the velocity at which the rope is fed into the cutting apparatus **20,** to allow for time delay to give a sufficient relaxation of the rope prior to being cut. The difference in the relative velocities of the rope traveling through the two determines the amount of time needed for the rope **14** to remain on the relaxation conveyor **18.** Thus, if the rope **14** is fed into the cutting apparatus **20** at a velocity that is about 10 m/min slower than the velocity at which the rope **14** passes through the rope sizer **16,** the time for relaxation on the conveyor **18** should be enough to compensate for the 10 m/min difference. Preferably, the fastest pair of rollers in the rope sizer **24b** move the rope **14** at about 5% to about 300 % faster than the velocity at which the rope **14** is fed into the cutting apparatus **20,** and more specifically about 10% to about 20% faster than the velocity at which the rope **14** is fed into the cutting apparatus **20.**

Preferably, the rope sizer **16** and cutting apparatus **20** are related by V_{rope sizer} > V_{cutting apparatus}; and A_{rope sizer} < A_{cutting} apparatus, where V is the velocity that the rope travels, and A is the cross sectional area of the rope. The rate of elongation between two rollers (E'₂₋₁) can be understood by the equation: E'₂₋₁ = V₂ - V₁. The total elongation between two rollers (E₂₋₁) is understood by the equation: E₂₋₁ = L₂/L₁ = V₂/V₁, wherein L₁ is the unit of rope that is stretched at the first pair of rollers **24a** in the rope sizer, L₂ is the unit of rope that is stretched in the rope sizer at the second pair of rollers **24b** in the rope sizer, V₁ is the velocity of the rope between the extruder **12** and the first pair of rollers **24a** in the rope sizer, and V₂ is the velocity of the rope between the first pair of rollers **24a** in the rope sizer **16** and the second pair of rollers **24** in the rope sizer **16.** Alternatively, V₂ and L₂ may be the velocity and unit of stretch, respectively, of the rope **14** in the cutting apparatus **20.** The total elongation represents the amount of stretch per length of rope that entered the rope sizer **16.** The rate of elongation between rollers **24** may be any desired rate from about 1 to about 30 m/min, and preferably is about 10-15 m/min. The total elongation between rollers **24** may be any elongation from about 1.1 to about 10, and more specifically about 1.5 to about 3. Thus, for every unit of length that is introduced into the rope sizer **16,** the elongated rope that has been sized may be about 1.1 to about 10 times as long, and more specifically about 1.5 to about 3 times as long. Optionally, the rope **14** can be elongated more at the beginning of the rope sizer **16** than at the end, it may be elongated more at the end of the rope sizer **16** than at the beginning, or the rope **14** may be substantially uniformly elongated as it travels through the rope sizer **16.**

The total elongation is determined by the total of the elongations as defined above, and is represented by the equation Eₜₒₜₐₗ = E₁₋₀ x E₂₋₁ x E₃₋₂ x ... E_{f-(f-1)}, and the total elongation rate E'ₜₒₜₐₗ = Σ E'ᵢ = E'₁₋₀ + E'₂₋₁ + E'₃₋₂ + ... E_{f-(f-1)}, wherein f is the total number of pair of rollers **24** in the rope sizer **16.** The relationship between the operating gaps and elongation is squared: Δgap ∼ (ΔE)². The specific gum elongation profile used greatly affects the propensity to shrinkage and seal failure. An ideal profile is the one that minimizes the amount of mechanical energy input. Elongation is controlled by the velocity of the rope as it travels though the individual components of the apparatus. The total elongation of the rope **14** according to the invention may be any elongation from about 1.1 to about 20, and more specifically about 1.5 to about 5.

## Claims

1. An apparatus (10) for preparing a center-filled consumable product comprising, in sequential order:
a. an extruder (12), which extrudes a continuous tubular rope of consumable product;
b. a rope sizer (16) for reducing the diameter of said extruded continuous tubular rope;
d. a relaxation conveyor (18) for moving said rope from said rope sizer (16) to said cutting apparatus (20) comprising c. an oscillating swing arm (32) for depositing the rope onto the relaxation conveyor (18) in a continuous wave pattern (34); and
e. a cutting apparatus (20) for cutting said continuous rope into said consumable product.

2. The apparatus (10) of claim 1, wherein said rope sizer includes a plurality of pairs of rollers aligned longitudinally for receipt of said tubular rope, wherein said rope sizer optionally includes a first pair of rollers (24a) for accommodating said tubular rope, a last pair of rollers (24b) for permitting egress of said tubular rope, and at least one additional pair of rollers therebetween.

3. The apparatus (10) of claim 1 or claim 2, wherein said relaxation conveyor (18) includes a conveyor belt (30), said conveyor belt (30) moving at a speed that is about 50% of the speed of the fastest roller in the rope sizer (16).

4. The apparatus (10) of any preceding claim, further comprising a means for applying an anti-sticking agent to at least one of the extruder (12), the rope sizer (16), the cutting apparatus (20), the relaxation conveyor (18), or the rope, wherein the anti-sticking agent is optionally a powder or an oil.

5. The apparatus (10) of any preceding claim, wherein said cutting apparatus (20) moves at a speed that is about 10% to about 20% slower than the fastest roller in the rope sizer (16).

6. The apparatus (10) of any preceding claim, further comprising an injection port for filling said tubular rope of consumable product with a second consumable product.

7. The apparatus of claim 1, wherein the rope sizer (16) comprises a plurality of pairs of rollers aligned longitudinally for receipt of said center-filled consumable product, wherein said rope sizer (16) includes a first pair of rollers (24a) for accommodating said center-filled consumable product, a last pair of rollers (24b) for permitting egress of said center-fitted consumable product, and at least one additional pair of rollers therebetween, and wherein said last roller pair (24b) moves at a speed of rotation greater than the speed of rotation of said first roller pair (24a), and optionally further comprising a means for applying an anti-sticking agent to at least one of said rope sizer (16) or said center-filled consumable product, wherein said anti-sticking agent is optionally a powder or an oil.

8. The apparatus of claim 2, wherein said roller pairs include grooved surfaces for accepting said center-filled consumable product; or wherein said last roller pair (24b) moves at a speed of rotation greater than the speed of rotation of said first roller pair (24a); and/or wherein the distance between said pairs of rollers decreases from said first pair of rollers (24a) to said last pair of rollers (24b), and/or wherein said pairs of rollers move said center- filled consumable product at velocities from about 10 m/min to about 125 m/min.

9. The apparatus of any preceding claim, wherein said rope sizer (16) reduces the thickness of said center-filled consumable product by about 30% to about 70%.

10. A method for forming a center-filled consumable product using an apparatus according to any preceding claim, the method comprising the steps of, in order:
a. extruding a continuous tubular rope of said consumable product;
b. reducing the diameter of said extruded continuous tubular rope;
c. passing the rope out of an oscillating swing arm (32), wherein the rope is deposited on a relaxation conveyor (18) in a continuous wave pattern (34); and
d. passing said rope along a relaxation conveyor (18); and
c. passing said rope into a cutting apparatus (20), wherein the cutting apparatus (20) cuts the rope into individual pieces.

11. The method of claim 10, further comprising the steps of:
reducing the diameter of said extruded continuous tubular rope; transporting said reduced diameter extruded rope along a movable relaxation conveyor (18); and
cutting said extruded continuous rope into individual pieces of said consumable product, wherein said step of reducing the diameter may further include providing a rope sizer (16), said rope sizer including a first pair of rollers (24a) for accommodating entry of said extruded tubular rope, and a last pair of rollers (24b) for permitting egress of said extruded tubular rope, and at least one pair of rollers therebetween; and/or
wherein said transporting step includes moving said relaxation conveyor (18) at a speed about 50% of the speed of the last roller pair (24b); and
wherein the method further comprises the step of applying an anti- sticking agent to the rope prior to said reducing step, wherein said anti-sticking agent is optionally a powder or an oil.

12. The method of claim 10, further comprising the steps of:
passing said extruded rope through a rope sizer (16), wherein said rope sizer (16) may include a plurality of pairs of rollers aligned longitudinally for receipt of said tubular rope, wherein said rope sizer optionally includes a first pair of rollers (24a) for accommodating said tubular rope, a last pair of rollers (24b) for permitting egress of said tubular rope, and at least one additional pair of rollers therebetween, wherein
each of said roller pairs optionally rotate at different speeds, wherein said last roller pair (24b) optionally moves at a speed of rotation greater than the speed of rotation of said first roller pair (24a).

## Patentansprüche

1. Gerät (10) zum Herstellen eines mittig gefüllten verzehrbaren Produkts, wobei es nacheinander Folgendes umfasst:
a. einen Extruder (12), der einen kontinuierlichen röhrenförmigen Strang an verzehrbarem Produkt extrudiert;
b. einen Stranganpasser (16) zur Verringerung des Durchmessers des extrudierten kontinuierlichen röhrenförmigen Strangs;
d. eine Relaxationsfördervorrichtung (18) zum Bewegen des Strangs vom Stranganpasser (16) zum Schneidegerät (20), umfassend c. einen oszillierenden Schwingarm (32) umfasst zum Ablegen des Strangs auf der Relaxationsfördervorrichtung (18) in einem durchgehenden Wellenmuster (34); und
e. ein Schneidegerät (20) zum Schneiden des kontinuierlichen Strangs in das verzehrbare Produkt.

2. Gerät (10) nach Anspruch 1, wobei der Stranganpasser eine Vielzahl von Paaren Walzen umfasst, die in Längsrichtung ausgerichtet sind, um den röhrenförmigen Strang aufzunehmen, wobei der Stranganpasser ein erstes Paar Walzen (24a) zum Empfangen des röhrenförmigen Strangs, ein letztes Paar Walzen (24b), um den Austritt des röhrenförmigen Strangs zu ermöglichen, und mindestens ein zusätzliches Paar Walzen optional umfasst, das sich dazwischen befindet.

3. Gerät (10) nach Anspruch 1 oder Anspruch 2, wobei die Relaxationsfördervorrichtung (18) ein Förderband (30) umfasst, wobei das Förderband (30) sich mit einer Geschwindigkeit bewegt, die ungefähr 50 % der Geschwindigkeit der schnellsten Walze in dem Stranganpasser (16) beträgt.

4. Gerät (10) nach einem der vorhergehenden Ansprüche, wobei es weiterhin ein Mittel zum Aufbringen eines Antihaftstoffs auf den Extruder (12), den Stranganpasser (16), das Schneidegerät (20), die Relaxationsfördervorrichtung (18) und/oder den Strang umfasst, wobei es sich bei dem Antihaftstoff optional um ein Pulver oder ein Öl handelt.

5. Gerät (10) nach einem der vorhergehenden Ansprüche, wobei das Schneidegerät (20) sich mit einer Geschwindigkeit bewegt, die ungefähr 10 % bis ungefähr 20 % langsamer ist als die schnellste Walze im Stranganpasser (16).

6. Gerät (10) nach einem der vorhergehenden Ansprüche, wobei es weiterhin einen Injektionsport zum Füllen des röhrenförmigen Strangs an verzehrbarem Produkt mit einem zweiten verzehrbaren Produkt umfasst.

7. Gerät nach Anspruch 1, wobei der Stranganpasser (16) eine Vielzahl von Paaren Walzen umfasst, die in Längsrichtung ausgerichtet sind, um das mittig gefüllte verzehrbare Produkt aufzunehmen, wobei der Stranganpasser (16) ein erstes Paar Walzen (24a) zum Empfangen des mittig gefüllten verzehrbaren Produkts, ein letztes Paar Walzen (24b), um den Austritt des mittig gefüllten verzehrbaren Produkts zu ermöglichen, und mindestens ein zusätzliches Paar Walzen umfasst, das dazwischen liegt, und wobei das letzte Walzenpaar (24b) sich mit einer Drehgeschwindigkeit bewegt, die größer ist als die Drehgeschwindigkeit des ersten Walzenpaars (24a), und wobei es weiterhin ein Mittel zum Aufbringen eines Antihaftstoffs auf den Stranganpasser (16) und/oder das mittig gefüllte verzehrbare Produkt optional umfasst, wobei es sich bei dem Antihaftstoff optional um ein Pulver oder ein Öl handelt.

8. Gerät nach Anspruch 2, wobei die Walzenpaare mit Rillen versehene Oberflächen umfassen, um das mittig gefüllte verzehrbare Produkt anzunehmen; oder wobei das letzte Walzenpaar (24b) sich mit einer Drehgeschwindigkeit bewegt, die größer ist als die Drehgeschwindigkeit des ersten Walzenpaars (24a); und/oder wobei der Abstand zwischen den Paaren Walzen vom ersten Paar Walzen (24a) zum letzten Paar Walzen (24b) abnimmt, und/oder wobei die Paare Walzen das mittig gefüllte verzehrbare Produkt mit Geschwindigkeiten von ungefähr 10 m/min. bis ungefähr 125 m/min. bewegen.

9. Gerät nach einem der vorhergehenden Ansprüche, wobei der Stranganpasser (16) die Dicke des mittig gefüllten verzehrbaren Produktes um ungefähr 30 % bis ungefähr 70 % verringert.

10. Verfahren zum Bilden eines mittig gefüllten verzehrbaren Produkts unter Verwendung eines Geräts gemäß einem der vorhergehenden Ansprüche, wobei das Verfahren die folgenden Schritte der Reihenfolge nach umfasst:
a. Extrudieren eines kontinuierlichen röhrenförmigen Strangs des verzehrbaren Produkts;
b. Verringern des Durchmessers des extrudierten kontinuierlichen röhrenförmigen Strangs;
c. Weiterleiten des Strangs aus einem oszillierenden Schwingarm (32) heraus, wobei der Strang in einem durchgehenden Wellenmuster (34) auf einer Relaxationsfördervorrichtung (18) abgelegt wird; und
d. Weiterleiten des Strangs entlang einer Relaxationsfördervorrichtung (18); und
e. Weiterleiten des Strangs in ein Scheidegerät (20), wobei das Schneidegerät (20) den Strang in einzelne Stücke schneidet.

11. Verfahren nach Anspruch 10, wobei es weiterhin die folgenden Schritte umfasst:
Verringern des Durchmessers des extrudierten, kontinuierlichen, röhrenförmigen Strangs; Befördern des extrudierten Strangs mit verringerten Durchmesser entlang einer beweglichen Relaxationsfördervorrichtung (18); und Schneiden des extrudierten kontinuierlichen Strangs in einzelne Stücke des verzehrbaren Produkts, wobei der Schritt des Verringerns des Durchmessers weiterhin das Bereitstellen eines Stranganpassers (16) umfassen kann, wobei dieser Stranganpasser ein erstes Paar Walzen (24a) für den empfangenden Eintritt des extrudierten röhrenförmigen Strangs und ein letztes Paar Walzen (24b), um den Austritt des extrudierten röhrenförmigen Strangs zu ermöglichen, und mindestens ein Paar Walzen umfasst, das dazwischen liegt; und/oder
wobei der Beförderungsschritt das Bewegen der Relaxationsfördervorrichtung (18) mit einer Geschwindigkeit umfasst, die ungefähr 50 % der Geschwindigkeit des letzten Walzenpaars (24b) beträgt; und
wobei das Verfahren weiterhin, im Vorfeld des Verringerungsschritts, den Schritt des Aufbringens eines Antihaftstoffs auf den Strang umfasst, wobei es sich bei dem Antihaftstoff optional um ein Pulver oder ein Öl handelt.

12. Verfahren nach Anspruch 10, wobei es weiterhin die folgenden Schritte umfasst:
Führen des extrudierten Strangs durch einen Stranganpasser (16), wobei der Stranganpasser (16) eine Vielzahl von Paaren Walzen umfassen kann, die in Längsrichtung ausgerichtet sind, um den röhrenförmigen Strang aufzunehmen, wobei der Stranganpasser ein erstes Paar Walzen (24a) zum Empfangen des röhrenförmigen Strangs, ein letztes Paar Walzen (24b), um den Austritt des röhrenförmigen Strangs zu ermöglichen, und mindestens ein zusätzliches Paar Walzen optional umfasst, das dazwischen liegt, wobei jedes der Walzenpaare sich mit verschiedenen Geschwindigkeiten optional dreht, wobei das letzte Walzenpaar (24b) sich mit einer Drehgeschwindigkeit optional bewegt, die größer ist als die Drehgeschwindigkeit des ersten Walzenpaares (24a).

## Revendications

1. Dispositif (10) pour préparer un produit pouvant être consommé empli en son centre, comportant suivant l'ordre séquentiel :
a. une extrudeuse (12), qui extrude un élément en forme de corde tubulaire continue de produit pouvant être consommé;
b. un dimensionneur (16) de corde pour diminuer le diamètre de la corde tubulaire continue extrudée;
d. un convoyeur (18) de relaxation pour déplacer la corde du dispositif (16) de dimensionnement de corde vers le dispositif (20) de découpe comportant c. un bras (32) de basculement oscillant pour déposer la corde sur le convoyeur (18) de relaxation suivant une configuration (34) ondulée continue; et
e. un dispositif (20) de découpe pour découper la corde continue en le produit pouvant être consommé.

2. Dispositif (10) suivant la revendication 1, dans lequel le dimensionneur de corde comporte une pluralité de paires de rouleaux alignées longitudinalement pour la réception de la corde tubulaire, dans lequel le dimensionneur de corde éventuellement comporte une première paire de rouleaux (24a) pour recevoir la corde tubulaire, une dernière paire de rouleaux (24b) pour permettre la sortie de la corde tubulaire, et au moins une paire supplémentaire de rouleaux entre elles.

3. Dispositif (10) suivant la revendication 1 ou 2, dans lequel le convoyeur (18) de relaxation comporte une courroie (30) de convoyage, la courroie (30) de convoyage se déplaçant à une vitesse qui est environ 50% de la vitesse du rouleau le plus rapide dans le dimensionneur (16) de corde.

4. Dispositif (10) suivant l'une quelconque des revendications précédentes, comportant en outre des moyens pour appliquer un agent anti-collant à au moins l'un de l'extrudeuse (12), du dimensionneur (16) de corde, du dispositif (20) de découpe, du convoyeur (18) de relaxation ou de la corde, dans lequel l'agent anti-collant est éventuellement une poudre ou une huile.

5. Dispositif (10) suivant l'une quelconque des revendications précédentes, dans lequel le dispositif (20) de découpe se déplace à une vitesse qui est d'environ 10% à environ 20% plus lente que le rouleau le plus rapide dans le dimensionneur (16) de corde.

6. Dispositif (10) suivant l'une quelconque des revendications précédentes, comportant en outre un orifice d'injection pour remplir la corde tubulaire de produit consommable avec un deuxième produit consommable.

7. Dispositif suivant la revendication 1, dans lequel le dimensionneur (16) de corde comporte une pluralité de paires de rouleaux alignées longitudinalement pour la réception du produit consommable empli centralement, dans lequel le dimensionneur (16) de corde comporte une première paire de rouleaux (24a) pour recevoir le produit consommable empli au centre, une dernière paire de rouleaux (24b) pour permettre la sortie du produit consommable empli au centre, et au moins une paire supplémentaire de rouleaux entre elles, et dans lequel la dernière paire (24b) de rouleaux se déplace à une vitesse de rotation qui est supérieure à la vitesse de rotation de la première paire (24a) de rouleaux, et éventuellement comportant en outre des moyens pour appliquer un agent anti-collant à au moins l'un du dimensionneur (16) de corde ou du produit consommable empli centralement, dans lequel l'agent anti-collant peut éventuellement être une poudre ou une huile.

8. Dispositif suivant la revendication 2, dans lequel la paire de rouleaux comporte des surfaces rainurées pour recevoir le produit consommable empli centralement; et/ou dans lequel la dernière paire (24b) de rouleaux se déplace à une vitesse de rotation supérieure à la vitesse de rotation de la première paire (24a) de rouleaux; ou dans lequel la distance entre les paires de rouleaux diminue de la première paire (24a) de rouleaux en direction de la dernière paire (24b) de rouleaux, et/ou dans lequel les paires de rouleaux déplacent le produit consommable empli centralement à des vitesses comprises entre environ 10 m/min et environ 125 m/min.

9. Dispositif suivant l'une quelconque des revendications précédentes, dans lequel le dimensionneur (16) de corde diminue l'épaisseur du produit consommable empli centralement d'environ 30% à environ 70%.

10. Procédé pour former un produit consommable empli centralement en utilisant un dispositif suivant l'une quelconque des revendications précédentes, le procédé comportant les étapes dans lesquelles, dans l'ordre :
a. on extrude une corde tubulaire continue du produit consommable;
b. on diminue le diamètre de la corde tubulaire continue extrudée;
c. on fait sortir la corde d'un bras (32) de basculement oscillant, dans lequel la corde est déposée sur un convoyeur (18) de relaxation suivant une configuration (34) ondulée continue; et
d. on fait passer la corde le long d'un convoyeur (18) de relaxation; et
e. on fait passer la corde dans un dispositif (20) de découpe, dans lequel le dispositif (20) de découpe découpe la corde en des parties individuelles.

11. Procédé suivant la revendication 10, comportant en outre les étapes dans lesquelles :
on diminue le diamètre de la corde tubulaire continue extrudée; on transporte la corde extrudée de diamètre diminué le long d'un convoyeur (18) de relaxation mobile; et
on découpe la corde continue extrudée en des parties individuelles du produit consommable, dans lequel l'étape de diminution du diamètre peut en outre comporter le fait de prévoir un dimensionneur (16) de corde, le dimensionneur de corde comportant une première paire de rouleaux (24a) pour recevoir l'entrée de la corde tubulaire extrudée, et une dernière paire de rouleaux (24b) pour permettre la sortie de la corde tubulaire extrudée, et au moins une paire de rouleaux entre elles; et/ou
dans lequel l'étape de transport comporte le fait de déplacer le convoyeur (18) de relaxation à une vitesse d'environ 50% de la vitesse de la dernière paire (24b) de rouleaux; et
dans lequel le procédé comporte en outre l'étape dans laquelle on applique un agent anti-collant à la corde avant l'étape de réduction, dans lequel l'agent anti-collant est en option une poudre ou une huile.

12. Procédé suivant la revendication 10, comportant en outre les étapes dans lesquelles :
on fait passer la corde extrudée dans un dimensionneur (16) de corde, dans lequel le dimensionneur (16) de corde peut inclure une pluralité de paires de rouleaux alignées longitudinalement pour la réception de la corde tubulaire, dans lequel le dimensionneur de corde comporte éventuellement une première paire de rouleaux (24a) pour recevoir la corde tubulaire, une dernière paire de rouleaux (24b) pour permettre la sortie de la corde tubulaire, et au moins une paire supplémentaire de rouleaux entre elles, dans lequel chaque paire de la paire de rouleaux tourne en option à des vitesses différentes, dans lequel la dernière paire (24b) de rouleaux se déplace en option à une vitesse de rotation supérieure à la vitesse de rotation de la première paire (24a) de rouleaux.
